# EUROPEAN PATENT SPECIFICATION

(11) **EP 1 272 788 B1**
(45) Date of publication and mention of the grant of the patent: **22.09.2004**
(21) Application number: 01917296.4
(22) Date of filing: 05.04.2001
(51) Int. Cl.: F16L 37/092

(54) **IMPROVEMENTS IN AND RELATING TO PIPE COUPLINGS**
VERBESSERUNGEN IN UND BEZÜGLICH ROHRKUPPLUNGEN
AMELIORATIONS DE MANCHONS ET CONCERNANT CEUX-CI

(30) Priority: 06.04.2000 GB 0008447
(43) Date of publication of application: 08.01.2003
(73) Proprietor: George Fischer Sales Ltd, Coventry CV2 2ST (GB)
(72) Inventor: WHITE, Nicholas, John, Stuart, Luton Beds LU2 9UP (GB)
(74) Representative: Wise, Stephen James
(86) International application number: PCT/GB2001/001507
(87) International publication number: WO 2001/077568

(56) References cited:
- EP-A- 0 339 155
- WO-A-92/20949
- DE-A- 3 232 221
- GB-A- 2 197 410
- US-A- 4 431 216

## Description

The present invention relates to pipe couplings for fluids such as gas and in particular for high speed and natural or Town gas.

Problems arise when coupling plastics gas pipe such as P.E. pipe to metal couplings using a push fit or stab type coupling. A push fit coupling is shown in US Patent No 4, 229, 025. This is essentially a plastics coupling comprising a plastics body reinforced internally by a frusto-conical metal sleeve surrounding a toothed collet having a corresponding frusto-conical surface, which is arranged to abut the metal sleeve. A flanged hollow cylindrical metal stiffener mounted inside the coupling acts as an internal reinforcement for a P.E. gas pipe to be coupled to the coupling. On inserting the gas pipe into the coupling body and over the stiffener, the gas pipe fits through the collet until it meets the stiffener flange. A pair of 'O' rings seals the outside of the gas pipe to an inside surface of the coupling body. Any attempt to withdraw the gas pipe from the coupling results in the collet moving with the pipe in the withdrawal direction so. that the collet is caused to crush on to the gas pipe by the interaction of the frusto-conical outer surface of the collet and the frusto-conical inner surface of the metal. sleeve Such a coupling has a large number of parts and is therefore expensive. A riser coupling as shown in GB 2, 340, 907 A suffers from similar problems and is not tamper proof. A still further problem with the riser coupling of GB 2, 340, 907 A is that where the inner gas pipe fits into the coupling, any out of circularity of the plastic gas pipe cross-section may make it difficult to insert. Hence it is apparently important to chamfer the end of the pipe as shown in the drawings for that document before fitting. This is an additional fitting operation. A similar problem with lack of tolerance is present in WO 92/20949.

Another coupling which is only a partial push fit coupling is shown in UK Patent GB 2,198,496, In this coupling, which has a metal body, a crush ring is forced on to a collet by screwing in a gland ring into the body, when the gland ring, or what is designated in the patent as a nipple, acts on a metal ring having a frusto-conical inner surface which acts! on a frusto-conical outer surface of a toothed collet, which by screwing the nipple into the body, forces the internal teeth of the collet to bite into an inserted gas pipe. This has the disadvantage that anybody tampering with the connection can uncouple the coupling perfectly easily by merely unscrewing the nipple. When using gas, this is a; dangerpus situation when conveying gas.
According to the invention, there is provided a push fit coupling comprising a hollow metal body, one end of which is arranged to receive a non-metallic gas pipe and the other end of which is arranged to connect to an article for communication with the gas pipe, the body having therein a seal arranged to seal between an external surface of the gas pipe and an internal surface of the body, a crushable ring within the body having a frusto-conical outer surface and a non-metallic sleeve having a frusto-conical inner surface and means to prevent withdrawal of the sleeve from the body, the sleeve and ring acting together so that any force acting to separate the pipe and coupling causes the sleeve's inner surface to act on the ring's outer surface to force the ring to engage more tightly onto the outer surface of a gas pipe inserted in the coupling and is characterised in that the non-metallic gas pipe has a stiffener inserted therein, the stiffener having a chamfered end arranged to fit through the seal on insertion wherein the sleeve is equal in hardness or harder than the material of the ring which in turn is harder than the material of the gas pipe to be fitted and wherein the sleeve is arranged to be snap fitted into the body, the sleeve being retained in the body by means of a groove engaging with a circumferential extension, the groove and extension snap fitting by means of resilient interaction together.
The coupling of the invention is very simple and requires merely about four or five parts apart from a pipe stiffener to form an effective coupling. The non-metallic sleeve ensures that a low coefficient of friction is maintained between the ring and the sleeve so as to ensure good engagement between the ring and the gas pipe in the event of attempted withdrawal. Because of its simplicity, it is less costly to manufacture than the coupling shown in US Patent No 4, 229, 025 or GB 2, 340, 907 A and does not have the disadvantages of that shown in GB 2, 198, 996. Because the pipe is fitted to the stiffener before fitting into the coupling, the stiffener, which is preferably formed of a harder material than the pipe, can be accurately formed and chamfered to pass with its pipe through the seal between the external surface of the pipe and the internal surface of the body of the coupling
Preferably, the body is arranged to receive an outer sheath, collar or cover surrounding the gas pipe which acts to protect the gas pipe from ultraviolet radiation and the ingress of grit or dirt into the coupling.

The gas pipe is preferably standard P.E. piping.
Alternatively, both the ring and sleeve can be made of the same material such as Delrin 107 (Delrin is the trademark of Dupont Corporation). Preferably, the metal body is made of malleable cast iron or mild steel.

A suitable clearance of between 1.0 and 0.7mm may be left between the sleeve and gas pipe so as to ensure a good withdrawal reaction between the ring and sleeve. The coupling is suitable for 20mm, 25mm and 32mm standard P.E. piping. A flanged stiffener for insertion into the end of the gas pipe may also be made of the same Delrin 107 material.
An advantage of the sleeve arrangement is that it can easily be snapped into an interior recess in the body so that the cost of tooling an interior surface of the body: which decreases in diameter towards the gas pipe entry of the body is cheaper to make, particularly with respect to that arrangement discussed above in relation to US Patent No 4,229,025.

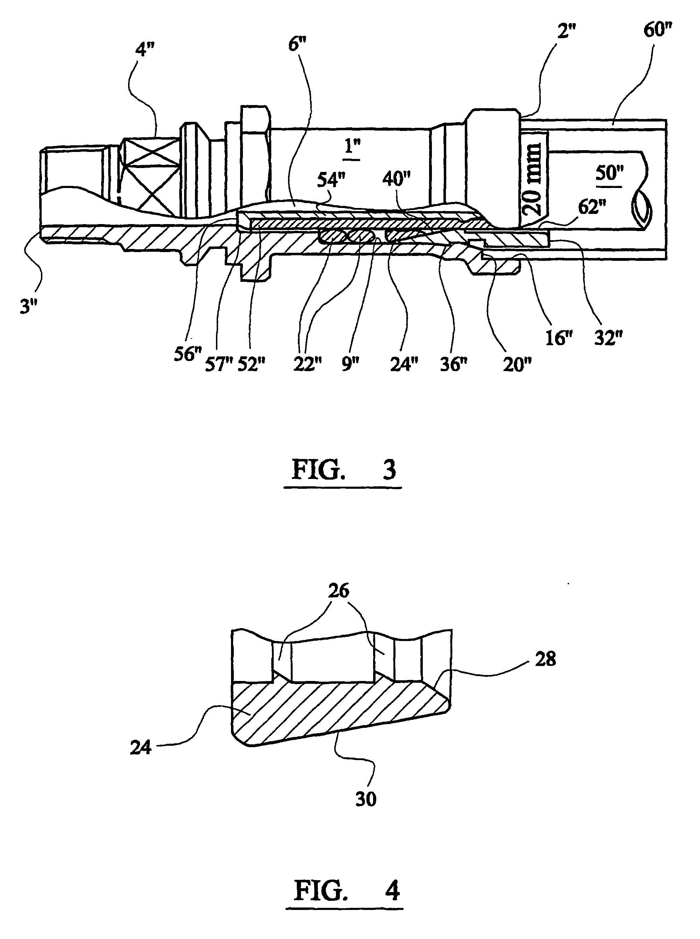

Embodiments of the invention will now be described by way of example with reference to the accompanying drawings, in which:-
Figures 1 to 3 are partial longitudinal cross sections of couplings according to the invention for 32mm, 25mm and 20mm P.E. gas pipe, and Figure 4 is an enlarged cross section of the crushable ring used in all three embodiments shown in Figures 1 to 3.

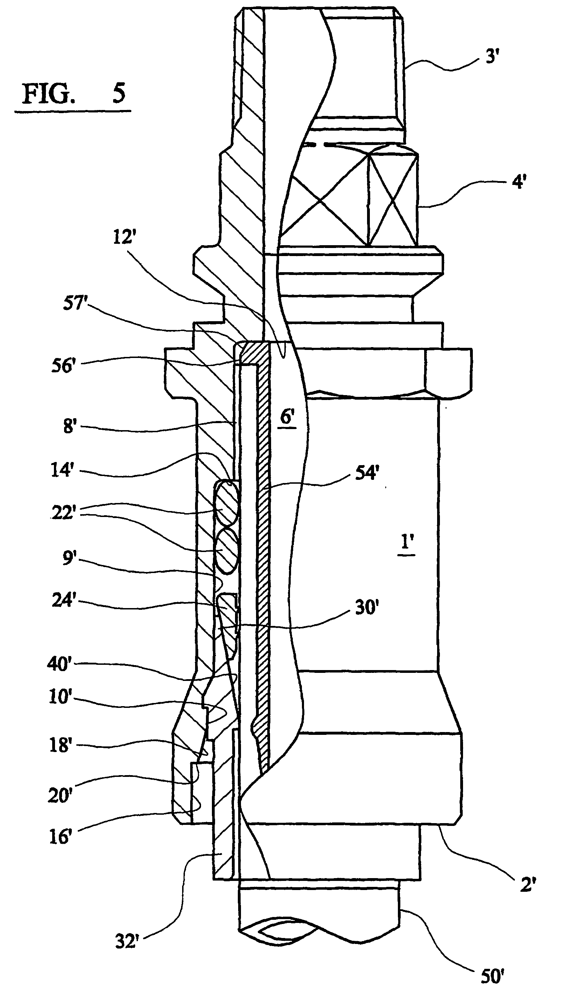

   Figure 5 is an enlargement of Figure 2.

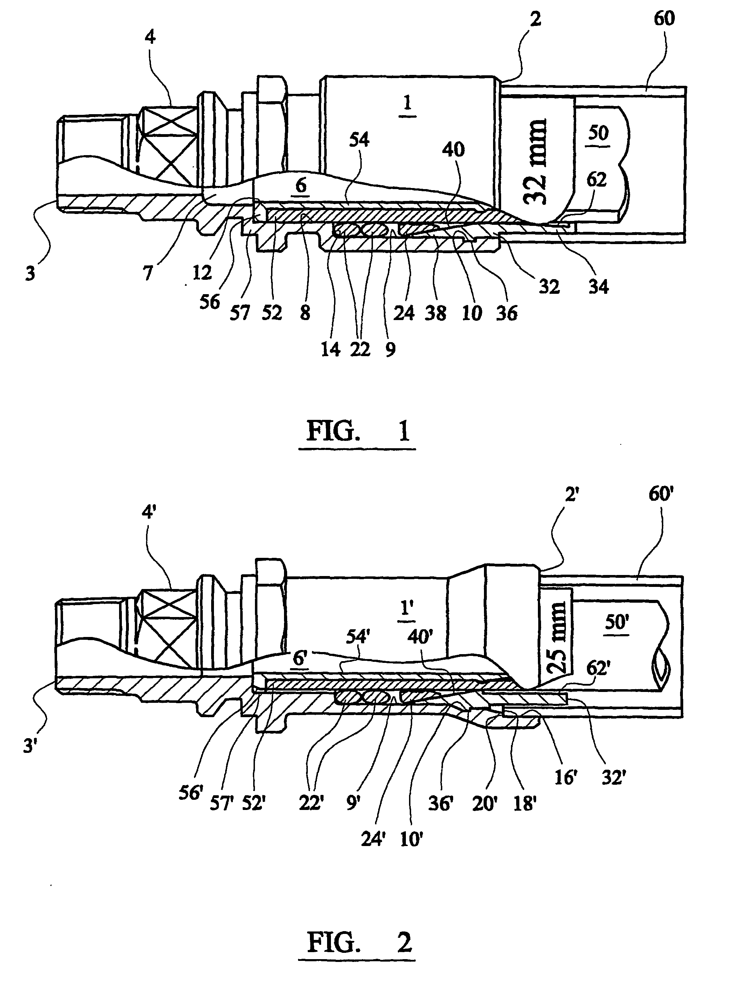

Figure 1 shows a coupling for a 32mm gas pipe, comprising a malleable cast iron or mild steel body 1, extending from a pipe entry 2 to the end of a threaded extension 3. The threaded extension can be connected to a manifold or meter or perhaps another length of piping, using a hexagonal portion 4 to prevent the! coupling from turning.
The body 1 at the entry end 2 has an internal recess 6 which, in the example shown in Figure 1, has an inner portion 7, a first intermediate portion 8 of a larger diameter than portion 7 and an outer portion 9 having a yet further larger diameter. The outer portion 9 has an internal groove 10 formed towards the mouth or entry of the coupling at 2. The increase in diameters between portions 7 and 8, and 8 and 9, results in shoulders 12 and 14 respectively. The embodiment shown in Figure 2 has a body with a slightly different internal conformation in that groove 10' is shaped slightly differently from groove 10 in the embodiment shown in Figure 1 and the outer portion 9' has a further extreme portion 16' extending outwardly from the outer portion, the purpose of which will be described below. Between outer portion 9' and extreme portion 16' is a chamfered portion 18', which provides a gradual transition from portion 16' to portion 9'.
The embodiment for Figure 3 has a body 1" which is generally much the same as that shown in Figure 2. The extreme portion 16" has a larger shoulder 20" than shoulder 20" in Figure 2.
Within outer portions 9, 9' and 9" , are pairs of 'O' rings 22, 22' and 22". Also within each of outer portions 9, 9' and 9" is a crushable ring 24, 24' and 24'', which is shown enlarged in Figure 4. Each crushable ring has a pair of internal teeth 26 and a chamfered entry area 28 and also a frusto-conical outer surface 30. The 'O' rings are suitably formed of an elastomeric material such as nitrile rubber. The rings 24 to 24'' are suitably formed of a hard tough plastics material such as Delrin 107.
Snap fitted into each entry 2 to 2" is a sleeve 32, 32' and 32'' respectively. The sleeve in Figure 1 will be described firstly and this comprises an outer portion 34, a circumferential outwardly extending portion 36 and an inner portion 38, having an internal frusto-conical surface 40. Sleeve 32' differs slightly from sleeve 32' in that the portions 36' and 36" have an inwardly facing chamfered shape. Sleeve 32 is suitably made from the same hard plastics material as ring 24, that is to say, suitably Delrin 107.
Each coupling is arranged to receive a P.E. gas pipe 50, 50' and 50" respectively and these have inserted in their ends 52 to 52" a hollow stiffener 54 having a flange 56 which abuts inwardly on shoulder 12 and outwardly on the end of pipe 50. The stiffener is made from a hard plastics material such as Delrin 107. The P.E. gas pipe is made of a softer material than Delrin 107 so that the teeth of ring 24, which is made of a harder material, can cut into the gas pipe to hold the same.
Surrounding the gas pipe 50 is a protective outer GRP collar or sheath 60, 60' and 60" respectively which in the embodiment shown in Figure 1 merely fits around the outer portion 34 of sleeve 32 but in the embodiment shown in Figures 2 and 3, fits between the sleeve's outer portions 32' and 32" and the inner surface of extreme portions 16, 16' and 16" respectively, to bottom of shoulders 20' and 20" respectively. The sheath 60 acts to protect the P.E. pipe from ultraviolet light and hence deterioration of the P.E.
   The sheath 60 also provides protection against the ingress of dirt into the coupling and especially into the clearance 62 between pipe 50 and sleeve 32 which in the region of outer portion 34 is some 1.0 to 0.7mm.
It would be appreciated that to assemble the coupling, all that need be done is to insert the 'O' rings 22 and crushable ring 24 and these are then kept in place by sleeve 32 which is snap fitted into a position where it engages in internal groove 10.
The coupling operates so that pipe 50, with a stiffener 54 already in place in the end of the pipe, is pushed into entry 2 of the coupling, past the clearance 62 of sleeve 32, and with the assistance of chamfer 28 of ring 24, it then passes through the ring and the 'O' seals so that the stiffener then abuts on shoulder 12. In the event of any relative force to withdraw the pipe 50 from coupling 1, ring 24 and sleeve 32' s frusto-conical abutting surfaces react to cause ring 24 to bite into pipe 50 and thereby by means of groove 10, the pipe 50 is locked firmly into coupling 1.

## Claims

1. A push fit coupling comprising a hollow metal body (1), one end (2) of which is arranged to receive a non-metallic gas pipe (50) and the other end (3) of which is arranged to connect to an article for communication with the gas pipe, the body having therein a seal (22) arranged to seal between an external surface of the gas pipe and an internal surface (9) of the body, a crushable ring (24) within the body having a frusto-conical outer surface (30) and a non-metallic sleeve (32) having a frusto-conical inner surface and means (10, 36) to prevent withdrawal of the sleeve from the body, the sleeve and ring acting together so that any force acting to separate the pipe and coupling causes the sleeve's inner surface to act on the ring's outer surface to force the ring to engage more tightly onto the outer surface of a gas pipe inserted in the coupling, **characterised in that** the non-metallic gas pipe (50) has a stiffener (54) inserted therein, the stiffener having a chamfered end (57) arranged to fit through the seal on insertion wherein the sleeve is equal in hardness or harder than the material of the ring which in turn is harder than the material of the gas pipe to be fitted and wherein the sleeve is arranged to be snap fitted into the body, the sleeve being retained in the body by means of a grove (10) engaging with a circumferential extension (36), the groove and extension snap fitting by means of resilient interaction together.

2. A coupling as claimed in claim 1 wherein the body is so constructed (16) and arranged as to receive an outer sheet, collar or cover surrounding the gas pipe when fitted.

3. A coupling as claimed in claim 2 wherein a gap (16) is formed between the sleeve (32) and body (1) to receive the outer sheath, collar, or cover.

4. A coupling as claimed in any one of claims 1 to 3 wherein a clearance of up to 1mm and suitably between 1.0 and 0.7mm is provided between the sleeve and gas pipe when fitter.

## Patentansprüche

1. Schiebekupplung umfassend einen hohlen Metallkörper (1), wobei ein Ende (2) so angeordnet ist, dass es das nichtmetallische Gasrohr (50) aufnimmt und das andere Ende (3) so angeordnet ist, dass es an einem Gegenstand zur Kommunikation mit dem Gasrohr angebracht ist, der Körper darin eine Dichtung (22) enthält, die so angeordnet ist, dass sie zwischen der externen Oberfläche des Gasrohrs und der inneren Oberfläche (9) des Körpers abdichtet, und einen zerquetschbaren Ring (24) im Körper mit einer stumpfkegeligen äußeren Oberfläche (30) und einer nichtmetallischen Hülse (32) mit einer stumpfkegeligen inneren Oberfläche sowie Hilfsmittel (10, 36), die das Lösen der Hülse vom Körper verhindern, wobei der Ring und die Hülse zusammenagieren, sodass jede angewandte Kraft zum Trennen von Rohr und Kupplung es verursacht, dass die innere Oberfläche der Hülse an der äußeren Oberfläche des Rings wirkt und dass der Ring die äußere Oberfläche eines Gasrohrs enger umschließt, welches in die Kupplung eingeführt wurde, **dadurch gekennzeichnet, dass** das nichtmetallische Gasrohr (50) über eine darin eingeführte Versteifung verfügt (54), die Versteifung abgefaste Enden (57) hat, die so angeordnet sind, dass sie beim Einführen durch die Dichtung passen, wobei die Hülse so hart oder härter als das Material des Ringes ist, welcher wiederum härter als das Material des Gasrohrs ist, an das er angebracht wird und wobei die Hülse so angeordnet ist, dass sie in den Körper einrastet, die Hülse im Körper durch eine Nut (10) gesichert ist, die an der peripheren Erweiterung (36) einrastet, wobei das Einrasten der Nut und der Erweiterung aufgrund gemeinsamer elastischer Interaktion erfolgt.

2. Kupplung nach Anspruch 1, wobei der Körper so aufgebaut (16) und angeordnet ist, dass bei der Einpassung des Gasrohrs ein äußerer Mantel, Stellring oder die Abdeckung, die das Gasrohr umgibt, aufgenommen werden kann.

3. Kupplung nach Anspruch 2, wobei eine Lücke (16) zwischen der Hülse (32) und dem Körper (1) geformt wird, um den äußeren Mantel, Stellring oder Abdeckung aufzunehmen.

4. Kupplung nach jedem der Ansprüche 1 bis 3, wobei der Abstand bis zu 1 mm und entsprechend zwischen 1,0 und 0,7 mm zwischen der Hülse und dem Gasrohr beim Einpassen bereitgestellt wird.

## Revendications

1. Manchon à ajustage correct comprenant un corps métallique creux (1), une extrémité (2) duquel est disposée pour recevoir une conduite de gaz non métallique (50) et l'autre extrémité (3) duquel est disposée pour connecter un article pour communiquer avec la conduite de gaz, le corps comprenant à l'intérieur de celui-ci un joint (22) disposé pour sceller entre une surface externe de la conduite de gaz et une surface interne (9) du corps, une bague broyable (24) à l'intérieur du corps comprenant une surface extérieure frusto-conique (30) et une chemise non métallique (32) comprenant une surface intérieure frusto-conique et des moyens (10, 36) pour empêcher le retrait de la chemise du corps, la chemise et la bague agissant ensemble de sorte qu'une quelconque force agissant pour séparer la conduite et le manchon entraîne la surface intérieure de la chemise à agir sur la surface extérieure de la bague pour forcer la bague à s'engager plus fermement sur la surface extérieure d'une conduite de gaz insérée dans le manchon, **caractérisé en ce que** la conduite de gaz non métallique (50) comprend un raidisseur (54) inséré dans celle-ci, le raidisseur comprenant une extrémité chanfreinée (57) disposée pour s'adapter dans le joint par insertion dans laquelle la chemise est de dureté égale ou supérieure au matériau de la bague qui, à son tour, est plus dure que le matériau de la conduite de gaz à adapter et dans laquelle la chemise est disposée pour être adaptée par fixation dans le corps, la chemise étant retenue dans le corps au moyen d'une rainure (10) s'engageant avec une extension circonférentielle (36), la rainure et l'extension s'adaptant par fixation au moyen d'une interaction élastique ensemble.

2. Manchon selon la revendication 1 dans lequel le corps est construit (16) et disposé de façon à recevoir une chemise extérieure, un collier ou un couvercle entourant la conduite de gaz une fois adapté.

3. Manchon selon la revendication 2 dans lequel un écart (16) est formé entre la chemise (32) et le corps (1) pour recevoir la chemise extérieure, le collier ou le couvercle.

4. Manchon selon l'une quelconque des revendications 1 à 3 dans lequel un jeu de 1 mm maximum et de préférence entre 1,0 et 0,7 mm est prévu entre la chemise et la conduite de gaz une fois adapté.
